Europäisches Patentamt

European Patent Office

Office européen des brevets

(11) Veröffentlichungsnummer: **0 415 215 A1**

# EUROPÄISCHE PATENTANMELDUNG

(21) Anmeldenummer: 90115878.2

(22) Anmeldetag: 18.08.90

(51) Int. Cl.5: **B21H 7/14**, B23P 11/02

(30) Priorität: 01.09.89 DE 3929080

(43) Veröffentlichungstag der Anmeldung:
06.03.91 Patentblatt 91/10

(84) Benannte Vertragsstaaten:
DE FR GB IT NL

(71) Anmelder: Krupp MaK Maschinenbau GmbH
Falckensteiner Strasse 2-4
W-2300 Kiel 17(DE)

(72) Erfinder: Schacht, Hans-Jürgen
Fischerstrasse 10
W-2303 Gettorf(DE)

(74) Vertreter: Hansmann, Dierk, Dipl.-Ing.
Jessenstrasse 4
W-2000 Hamburg 50(DE)

(54) Verfahren zur Oberflächenbehandlung.

(57) Bei einem Verfahren zur Behandlung von Oberflächen reibschlüssig miteinander zu verbindender Werkstücke wird zur Erhöhung der Haftsicherheit des Reibungskontaktes auf der Oberfläche eines der Werkstücke (1) ein rollen- oder walzenförmiges Element (5) abgerollt, dessen Außenfläche mit Erhebungen (6) versehen ist. Letztere sind vorzugsweise kalottenförmig ausgebildet und hinterlassen auf der Oberfläche muldenförmige Eindrücke. Das Verfahren eignet sich insbesondere für die Behandlung der Oberflächen von radialsymmetrischen Ausnehmungen in Werkstücken und kann mit einer Rändelrolle durchgeführt werden, die an einem in einer Drehspindel aufgenommenen Rändelhalter drehbar gehaltert ist und die zu diesem Zweck mit kalottenförmigen Erhebungen versehen ist.

Fig. 1

# VERFAHREN ZUR OBERFLÄCHENBEHANDLUNG

Die Erfindung betrifft ein Verfahren zur Behandlung der Oberflächen von reibschlüssig miteinander zu verbindenden Bauteilen gemäß dem Oberbegriff des Anspruchs 1. Ferner betrifft sie ein Vorrichtung zur Durchführung eines derartigen Verfahrens.

Im Bereich des Maschinenbaus stellt es eine bekannte konstruktive Maßnahme dar, die Oberflächen einzelner Komponenten unter hohem Druck miteinander zu verpressen und diese Komponenten so in einen reibschlüssigen Kontakt miteinander zu bringen, in dem sie währen des Betriebes der entsprechenden Maschine verbleiben. Üblicherweise weist dabei eine der beiden miteinander zu verbindenden Oberflächen eine größere Härte auf als die zweite Oberfläche. Als Beispiele solcher reibschlüssigen Verbindungen seien Bandagen, Schrumpfringe, Schrumpfkonen, Wellenverbindungen, Buchsen oder Halbschalen genannt.

Infolge der Betriebsbeanspruchungen können dabei an derartigen reibschlüssig miteinander verbundenen Komponenten Verformungen auftreten, die an den Trennstellen der miteinander verpreßten Flächen zu Mikroverschiebungen, Mikrowandern, Walken oder ähnlichen Erscheinungen führen können. Bei schnell und häufig belasteten Komponenten, wie Lagern von Verbrennungsmotoren oder Zahnradbandagen, können als Folge dieser Mikroverschiebungen lokale Verschweißungen auftreten, die ihrerseits Mikrobeschädigungen der Oberflächen verursachen können. Bei hohen Betriebsbeanspruchungen kann es dadurch zur Entstehung von Ermüdungsrissen kommen, die schließlich zu Dauerbrüchen führen.

Eine bekannte Maßnahme, derartige Mikroverschiebungen zu vermeiden, besteht darin, den Anpreßdruck reibbeanspruchter Komponenten zu vergrößern, was aber zugleich zu einer weiteren Erhöhung der mechanischen Belastungen führt.

Eine andere Maßnahme sieht die Erhöhung der Reibung der verpreßten Flächen dadurch vor, daß zwischen diese Flächen Haftmittel, wie Kleber oder Stäube, eingebracht werden.

Schließlich ist es zur Vermeidung dieser Problematik bereits bekannt, diejenigen der miteinander zu verbindenden Oberflächen, die die größere Härte aufweist, mittels Kugelstrahlen zu behandeln. Hierdurch erfolgt eine gezielte Aufrauhung dieser Oberfläche, die eine deutliche Verbesserung der Haftung der miteinander verpreßten Flächen bewirken kann. Gleichzeitig wird durch diese Maßnahme die Oberfläche weiter verfestigt.

Ein Nachteil dieses letztgenannten Verfahrens besteht jedoch darin, daß es für eine Vielzahl von Bauteilen nicht einsetzbar ist. So kann dieses Verfahren unter anderem nicht an einem Bohrwerk einer Pleuelstangenbearbeitungsvorrichtung bzw. an einer automatischen Drehmaschine durchgeführt werden.

Deshalb ist es Aufgabe der Erfindung, ein gattungsgemäßes Verfahren so zu verbessern, daß es auch für die Oberflächenbearbeitung von radialsymmetrischen Ausnehmungen in Werkstücken mit dem Ziel einer Verbesserung der Haftsicherheit dieser Werkstücke bei Reibungskontakt verwendbar ist. Weiterhin ist es Aufgabe der Erfindung, eine Vorrichtung zur Durchführung eines solchen Verfahrens bereitzustellen.

Die Lösung der ersten Aufgabe erfolgt bei einem gattungsgemäßen Verfahren durch die im Kennzeichen des Patentanspruchs 1 angegebenen Merkmale. Vorteilhafte Ausgestaltungen des erfindungsgemäßen Verfahrens sind dabei in den Unteransprüchen 2 und 3 angegeben. Zur Lösung der weiteren Aufgabe ist eine Vorrichtung mit den kennzeichnenden Merkmalen des Patentanspruchs 4 vorgesehen.

Im folgenden soll die Erfindung anhand eines in der Zeichnung dargestellten Ausführungsbeispiels näher erläutert werden. Es zeigen:

Fig. 1 einen vertikalen Schnitt durch ein Werkstück mit einer Bearbeitungsvorrichtung,

Fig. 2 einen vergrößerten Detailschnitt gemäß II-II durch in Fig. 1 dargestellte Anordnung und

Fig. 3 einen vergrößerten Ausschnitt aus dem Verbindungsbereich zweier Werkstücke.

In den Figuren sind gleiche Bauteile mit den gleichen Bezugszeichen versehen.

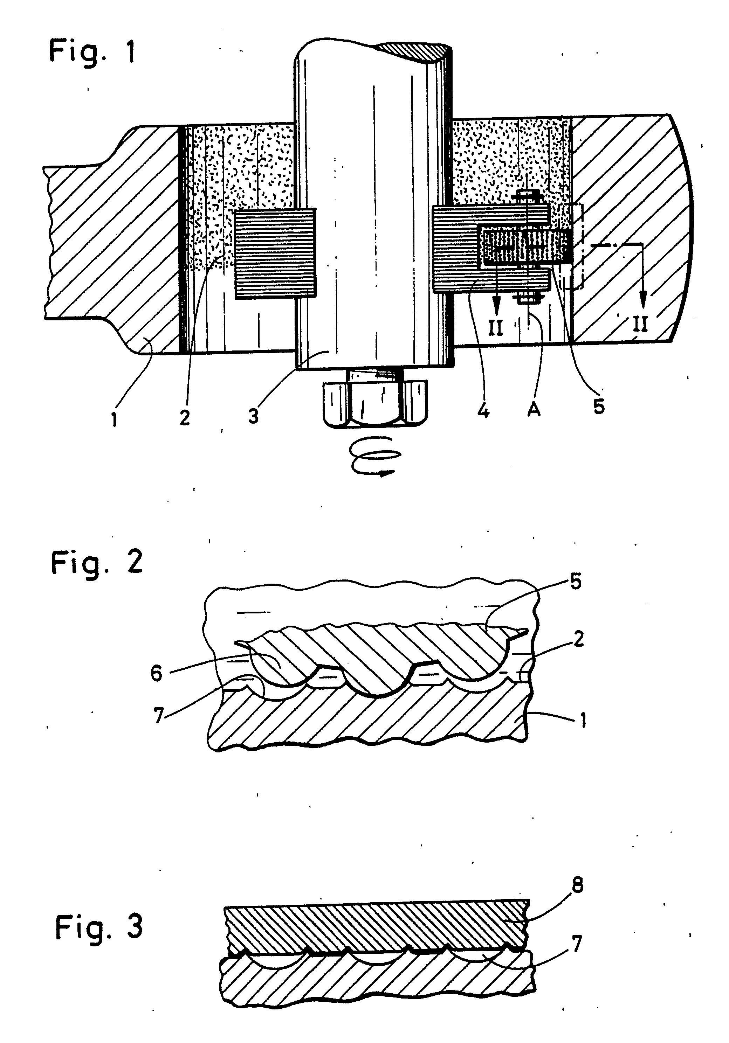

Bei dem in Fig. 1 geschnitten dargestellten Werkstück 1 handelt es sich um den Pleuelkopf einer Pleuelstange, der mit einer zylindrischen Bohrung 2 versehen ist. Die Oberfläche dieser Bohrung 2 wurde zunächst mittels Feinstdrehen bearbeitet und wird nun mit der in Fig. 1 dargestellten Bearbeitungsvorrichtung nachbearbeitet.

Die Bearbeitung erfolgt dabei mit einer Drehspindel 3 sowie einem in dieser aufgenommenen Rändelhalter 4, der seinerseits auf einer Drehachse A, die in etwa parallel zur Drehachse der Drehspindel 3 verläuft, eine Rändelrolle 5 trägt. Die Oberfläche der Rändelrolle 5 ist dabei, wie insbesondere aus der vergrößerten Darstellung in Fig. 2 ersichtlich wird, nicht in der sonst üblichen Weise mit spitzen Außenkegeln oder Prismen versehen, sondern weist stattdessen kalotten- bzw. halbkugelförmige Erhebungen 6 auf. Letztere besitzen im Fall des hier dargestellten Ausführungsbeispiels einen Durchmesser in der Größenordnung weniger Zehntel Millimeter und sind dicht beieinanderliegend auf dem Umfang der Rändelrolle 6 angeordnet.

Indem, nach dem Feinstdrehen der Oberfläche der Bohrung 2 der Rändelhalter 4, in diesem Fall automatisch, in das Drehspindelwerk 3 eingesetzt und, wie in Fig. 1 angedeutet, die Drehspindel 3 mit vorgegebener Drehzahl und einem der Rändelteilung entsprechenden Vorschub durch die Bohrung 2 bewegt wird, rollt die Rändelrolle 5 auf der Oberfläche der Bohrung 2 ab. Der Anpreßdruck, mit dem die Rändelrolle 5 dabei die Oberfläche beaufschlagt, ist dabei durch die Aufnahme des Rändelhalters 4 in der Drehspindel 3 vorgebbar.

Beim Ablaufen der Rändelrolle 5 entstehen auf der feinstgedrehten Oberfläche der Bohrung 2 kalottenförmige Mulden 7, deren äußerer Rand kraterförmig aufgeworfen ist. Diese kraterartigen Aufwürfe verklammern sich, wie in Fig. 3 dargestellt ist, derartig mit der Oberfläche einer in die Bohrung 2 eingepreßten Lagerschale bzw. Lagerbuchse 8, daß die beiden Oberflächen nicht mehr gegeneinander verschiebbar sind.

## Ansprüche

1. Verfahren zur Behandlung der Oberflächen von reibschlüssig miteinander zu verbindenden Werkstücken durch das Einbringen muldenförmiger Eindrücke in die Oberfläche eines der Werkstücke, insbesondere in die Oberfläche einer in diesem Werkstück befindlichen radialsymmetrischen Ausnehmung, dadurch gekennzeichnet, daß ein rollen- oder walzenförmiges Element (5), dessen dem Werkstück (1) zugewandte Außenfläche mit Erhebungen (6) versehen ist, auf der Oberfläche abgerollt wird.

2. Verfahren nach Anspruch 1, dadurch gekennzeichnet, daß die Erhebungen (6) kalottenförmig ausgebildet sind.

3. Verfahren nach Anspruch 1 oder 2, dadurch gekennzeichnet, daß die Oberfläche zuvor durch Feinstdrehen bearbeitet wird.

4. Verfahren nach nach einem der Ansprüche 1 bis 3, dadurch gekennzeichnet, daß das Element (5) spiralförmig auf der Oberfläche abgerollt wird.

5. Vorrichtung zur Durchführung des Verfahrens nach einem der Ansprüche 1 bis 4, bestehend aus einem eine Rändelrolle tragenden, in eine Drehspindel einsetzbaren Rändelhalter, dadurch gekennzeichnet, daß die Umfangsfläche der Rändelrolle (5) mit kalottenförmigen Erhebungen (6) versehen ist.

6. Vorrichtung nach Anspruch 5, dadurch gekennzeichnet, daß die Erhebungen (6) einen Durchmesser in der Größenordnung von einigen Zehntel Millimetern aufweisen.

## Fig. 1

## Fig. 2

## Fig. 3

**Europäisches Patentamt**

# EUROPÄISCHER RECHERCHENBERICHT

Nummer der Anmeldung

**EP 90 11 5878**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,A | US-A-3 587 272   (OLDBERG MANUFACTURING COMP.)<br>* Zusammenfassung; Figuren *<br>— — — | 1,2,4,5,6 | B 21 H 7/14<br>B 23 P 11/02 |
| A | Soviet Inventions Illustrated, Sektion P, Woche 85/40, 15 November 1985 Derwent Publications Ltd., London<br>& SU-A-1146169 (KIEV LIGHT IND) 23 MÄRZ 1985<br>— — — | 1,2,3,6 | |
| A | Soviet Inventions Illustrated, Sektion P , Woche 84/24, 25 Juli 1984 Derwent Publication Ltd., London<br>& SU-A-1042943 (KHABAROV POLY) 23 SEPTEMBER 1983<br>— — — | 1,4,5 | |
| A | US-A-3 513 678   (MEYER)<br>* Spalten 1 - 2; Figuren *<br>— — — | 1,5 | |
| A | US-A-3 508 773   (KOBE)<br>* Figur 2 *<br>— — — | 1 | |
| A | US-A-1 707 400   (CLEVELAND GRAPHITE BRONZE COMP.)<br>— — — | | |
| A | EP-A-0 034 549   (VALLOUREC)<br>— — — — — | | RECHERCHIERTE SACHGEBIETE (Int. Cl.5)<br><br>B 23 P<br>B 21 H<br>F 16 B |

Der vorliegende Recherchenbericht wurde für alle Patentansprüche erstellt

| Recherchenort | Abschlußdatum der Recherche | Prüfer |
|---|---|---|
| Den Haag | 23 November 90 | RIS M. |